(19) Europäisches Patentamt

European Patent Office

Office européen des brevets

(11) Veröffentlichungsnummer: **0 215 384**
**A2**

# (12) EUROPÄISCHE PATENTANMELDUNG

(21) Anmeldenummer: 86112237.2

(51) Int. Cl.⁴: **B23D 33/00**

(22) Anmeldetag: 04.09.86

(30) Priorität: 14.09.85 DE 3532913

(43) Veröffentlichungstag der Anmeldung:
25.03.87 Patentblatt 87/13

(84) Benannte Vertragsstaaten:
DE FR GB IT

(71) Anmelder: **Kunz, Dieter, Dipl.-Ing.**
**Oberhöchstädter Strasse 12a**
**D-6242 Kronberg/Taunus(DE)**

(72) Erfinder: **Kunz, Dieter, Dipl.-Ing.**
**Oberhöchstädter Strasse 12a**
**D-6242 Kronberg/Taunus(DE)**

(74) Vertreter: **Gudel, Diether, Dr. et al**
**Patentanwälte Dr. V. Schmied-Kowarzik**
**Dipl.-Ing. G. Dannenberg Dr. P. Weinhold Dr.**
**D. Gudel Dipl.-Ing. S. Schubert Dr. P. Barz**
**Grosse Eschenheimer Strasse 39**
**D-6000 Frankfurt am Main 1(DE)**

(54) **Maschine zum Beschneiden des Randes eines Formteils.**

(57) Beschrieben wird eine Randbeschneidemaschine mit einem gegenüber der Horizontalen geneigten Arbeitstisch. Ein heb-und senkbarer Ausstoßerring ist vorgesehen, der den vom Formteil abgetrennten Abfallring des Werkstücks über die Werkstückaufnahme anhebt, so daß der Abfallring dann mittels Schwerkraft über den Ausstoßerring und anschließend über die geneigte Fläche des Arbeitstisches abtransportiert wird. Der Vorteil liegt in einer automatischen Trennung des Abfalls vom Gutteil, lediglich durch Schwerkraft bedingt.

Fig. 1

EP 0 215 384 A2

## Maschine zum Beschneiden des Randes eine Formteils

Die Erfindung betrifft eine Maschine zum Beschneiden des Randes eines Formteils mit einer auf Drehung angetriebenen Werkstückaufnahme mit einem Innen-Schermesser, mit einem an das Innen-Schermesser an-und abstellbaren Außen-Beschneidemesser, mit einer Spannvorrichtung zum Aufspannen des vorzugsweise becherförmigen Formteils auf die Werkstückaufnahme und mit einem Arbeitstisch. Außerdem bezieht sich die Erfindung auf ein Arbeitsverfahren für eine Maschine zum Beschneiden des Randes eines Formteils, wobei man das Formteil auf einer Werkstückaufnahme aufspannt und dessen Rand beschneidet, worauf man das daraus entstehende Gutteil und den Abfallring voneinander trennt und beide Teile getrennt abtransportiert.

Eine derartige Maschine und ein solches Arbeitsverfahren sind durch die GB-PS 1,555,114 bekannt. Bei dieser bekannten Maschine verläuft der Arbeitstisch bei horizontaler Anordnung der Drehachse der Werkstückaufnahme horizontal. Damit ist aber der Nachteil verbunden, daß der beim Beschneiden entstehende Abfallring längs der Werkstückaufnahme herunter auf den Arbeitstisch fällt. Er muß dort durch gesonderte Maßnahmen entfernt werden, wobei man entweder den Abfallring nach dem Abheben des Gutteils ebenfalls von der Werkstückaufnahme von Hand abhebt und dann in einen Schrottbehälter gibt, oder man muß hierzu den Abfallring auftrennen, um ihn von der Werkstückaufnahme abziehen zu können. Beide bekannte Arbeitsverfahren sind aber arbeitsaufwendig und auch mit Verletzungsgefahren verbunden. Auch nimmt das becherförmige Formteil keine stabile Lage auf der Werkstückaufnahme ein.

Die Erfindung vermeidet diese Nachteile. Ihr liegt die Aufgabe zugrunde, eine Maschine und ein Arbeitsverfahren für eine Maschine der eingangs genannten Art vorzuschlagen, das eine selbsttätige Entfernung des Abfallstücks zu einem Bereich außerhalb des eigentlichen Arbeitsbereichs der Maschine ermöglicht.

Zur Lösung dieser Aufgabe ist die erfindungsgemäße Maschine dadurch gekennzeichnet, daß der Arbeitstisch gegenüber der Horizontalen geneigt ist und daß ein parallel zur Ebene des Arbeitstisches angeordneter,heb-und senkbarer Ausstoßerring vorgesehen ist, der den vom Formteil abgetrennten Abfallring über die Werkstückaufnahme anhebt.

Das erfindungsgemäße Verfahren ist zur Lösung der erwähnten Aufgabe dadurch gekennzeichnet, daß man nach dem Abtransport des Gutteils den Abfallring mit Hilfe eines zur Horizontalen geneigt angeordneten Ausstoßerringes über die Werkstückaufnahme anhebt, über die möglichst glatt ausgebildete Oberseite des Ausstoßerringes mittels Schwerkraft vom Ausstoßerring abrutschen läßt und auf einer gegenüber der Horizontalen geneigten Rutsche (Arbeitstisch) abfördert, die den Abfallring bzw. das Abfallstück ebenfalls mittels Schwerkraft weitertransportiert.

Durch diese Maßnahmen wird das Abfallstück - (Schrott) selbsttätig aus dem Bereich der Werkstückaufnahme, d.h. aus dem eigentlichen Arbeitsbereich der Maschine, abtransportiert, beispielsweise in einen Abfallbehälter - (Schrottbehälter). Dies erfolgt mittels Schwerkraft, so daß die Maschine und das Arbeitsverfahren der erfindungsgemäßen Maschine konstruktiv wenig aufwendig sind. Muß man doch lediglich zusätzlich den heb-und senkbaren Ausstoßerring vorsehen und den Arbeitstisch geneigt anordnen.

Der Patentgegenstand besteht daher in seinem Kern gewissermaßen in einem Kompromiß zwischen der bisher praktizierten lotrechten Anordnung der Drehachse der Werkstückaufnahme und der ebenfalls möglichen, horizontalen Ausrichtung dieser Drehachse, indem die Vorteile beider Anordnungen erreicht werden, ohne deren Nachteile in Kauf zu nehmen.

Die Neigung des Arbeitstisches soll man so wählen, daß dieser einerseits möglichst groß ist, um nämlich eine möglichst große Schwerkraftkomponente auf das Abfallstück heinwirken zu lassen, während der Neigungswinkel andererseits das auf die Werkstückaufnahme aufgesetzte Formteil eine stabile Lage einnehmen lassen soll.

Versuche haben gezeigt, daß bei üblichen Formteilen bzw. Abfallstücken oder Abfallringen ein Neigungswinkel zwischen etwa 25°und 40° optimal ist. Insbesondere hat sich ein Neigungswinkel von etwa 30° als sehr gut herausgestellt.

Beim Stand der Technik ist an der Werkstückaufnahme direkt unterhalb ihres Innen-Schermessers eine ringförmige Stufe vorgesehen, damit nämlich das angestellte Außen-Beschneidemesser den Rand des Formteils abtrennen kann. Der Abfallring fällt dann bei der bekannten Ausbildung der Werkstückaufnahme herunter und bleibt häufig an der Stufung hängen, was ein zusätzliches Problem für den Abtransport des Abfallringes schafft. Erfindungsgemäß ist daher diesbezüglich vorgesehen, daß an der Werkstückaufnahme direkt unterhalb des Innen-Schermessers ein Ring vorgesehen ist, dessen Außendurchmesser etwa dem Außendurchmesser des Innen-Schermessers entspricht, der über Federn koaxial zur Drehachse der Werkstückaufnahme gehalten ist und der bei Einwirken einer Kraft in radialer Richtung sich radial in eine exzentrische Lage verstellt.

Durch diese Ausbildung der Werkstückaufnahme gibt zwar der Ring beim Abtrennvorgang entsprechend nach und übernimmt daher hier die Funktion der Stufung bei der bekannten Werkstückaufnahme, jedoch wird zusätzlich der Vorteil erreicht, daß der Ring nach Beendigung des Trennvorganges seine koaxiale Lage wieder einnimmt und damit auch den Abfallring entsprechend zentriert, so daß dieser über den Ausstoßerring ohne Schwierigkeiten über die Kante des Innen-Schermessers nach oben abgezogen werden kann.

Die Erfindung wird im folgenden anhand eines Ausführungsbeispieles näher erläutert, aus dem sich weitere wichtige Merkmale ergeben. Es zeigt:

Fig. I -schematisch eine Ansicht der wichtigen Bauteile einer erfindungsgemäßen Maschine;

Fig. 2 -die Einzelheit X von Fig. I in vergrößertem Maßstab, wobei das Beschneiden des topfförmigen Formteils gezeigt ist;

Fig. 3 -die Einzelheit X während des Ausschiebens des Gutteils;

Fig. 4 -die Einzelheit X während des Ausstoßen des Abfallringes;

Fig. 5 -nochmals vergrößert die Situation von Fig. 2 mit Einzelheiten des Führungsringes der Werkstückaufnahme;

Fig. 6 -die Situation von Fig. 5 nach Beendigung des Trennvorgangs;

Fig. 7 -dieselbe Situation anschließend mit Zentrierung des Abfallringes in der Achse der Werkstückaufnahme.

Zunächst sei anhand von Fig. I der grundsätzliche Aufbau der erfindungsgemäßen Beschneidemaschine erläutert. Diese besteht aus einem Rahmen I mit einem Arbeitstisch 2, der zur Horizontalen um einen Winkel von etwa 30° geneigt ist. An einem Ständer 3 ist ein Spannzylinder 4 mit einer Spannpinole 5 befestigt, deren unteres Ende einen Spannteller 6 trägt. In der Achse des Spannzylinders ist vom Spannteller beabstandet eine Werkstückaufnahme 7 vorgesehen, die um diese Achse 8 über den Hauptantrieb der Maschine drehbar ist.

Seitlich neben der Werkstückaufnahme 7 ist ein äußeres Beschneidemesser 9 vorgesehen, das in Richtung des Doppelpfeiles I0 über eine Kolben-Zylinder-Einheit II an-bzw. abgestellt werden kann. Hierfür ist das Beschneidemesser an einem Bearbeitungsschlitten I2 verschiebbar gelagert.

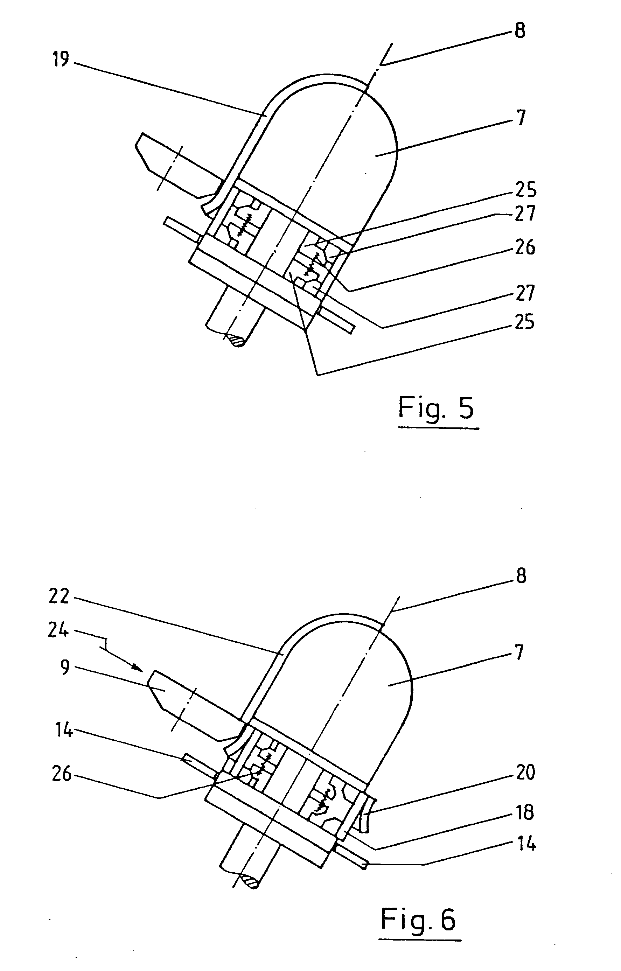

Das Beschneidemesser 9 arbeitet mit einem Innen-Schermesser I3 der Werkstückaufnahme 7 zusammen. Dies ist insbesondere in den Fig. 5 bis 7 deutlicher gezeigt.

Koaxial zur Werkstückaufnahme 7 ist ein Ausstoßerring I4 vorgesehen, der in Richtung des Doppelpfeiles I5 über einen Auswerferzylinder I6 und ein geeignetes Gestänge I7 angehoben bzw. abgesenkt werden kann. Fig. I zeigt den Ring I4 in seiner abgesenkten Stellung.

Direkt unterhalb des Innenrings I3 ist ein Zentrierring I8 vorgesehen, der in radialer Richtung gegen Federkraft verstellt werden kann.

Die Werkstückaufnahme kann zur Anpassung an unterschiedlich große, zu bearbeitende Formstücke, spannbar sein. Sie muß dies aber nicht.

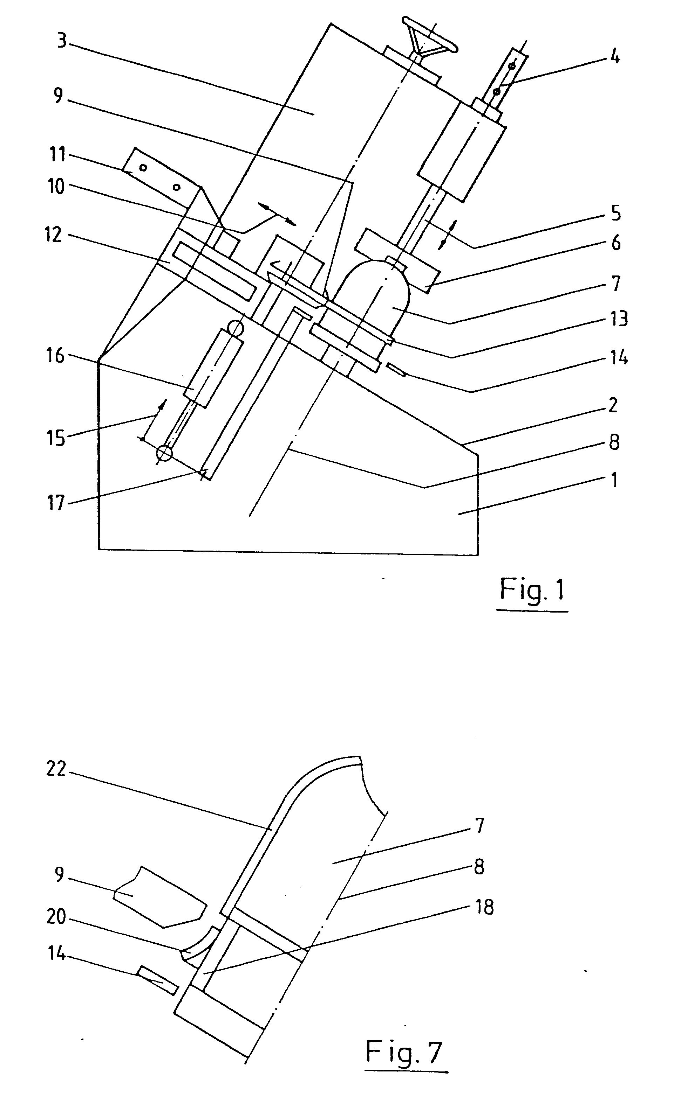

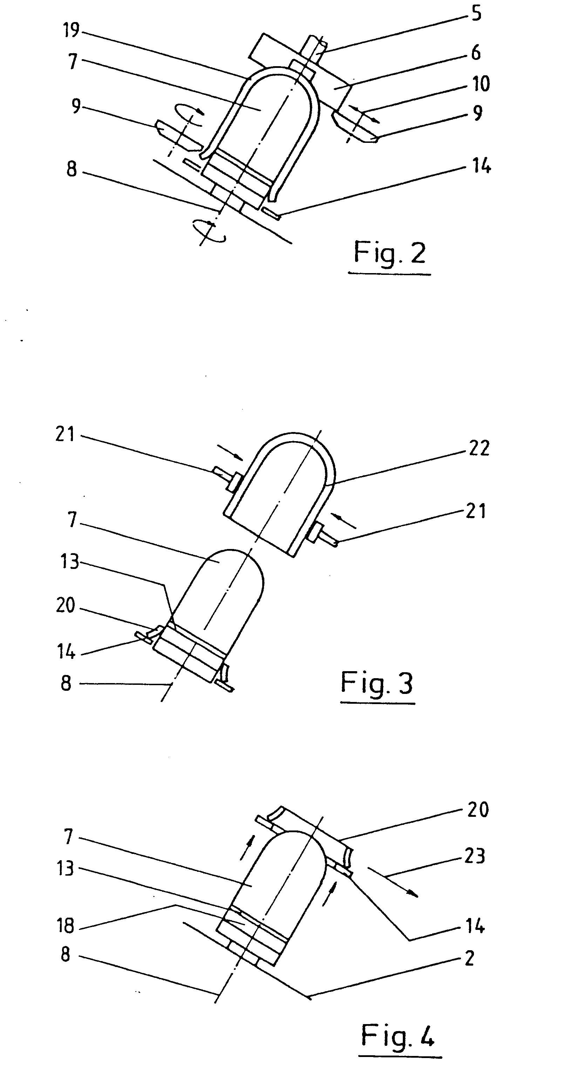

Zum Beschneiden des (unteren) Randes eines in den folgenden Fig. näher gezeigten,beispielsweise tiefgezogenen Formteils, wird dieses auf die Werkstückaufnahme 7 aufgesetzt und über den Spannzylinder 4 mit Spannteller 6 festgespannt. Dann wird das äußere Beschneidemesser 9 an das Werkstück I9 angestellt, wie Fig. 2 zeigt. Die Werkstückaufnahme 7 dreht sich, so daß durch das Zusammenwirken der beiden Messer 9, I3 der untere Rand des Werkstücks abgetrennt werden kann. Dies ergibt ein - (ringförmiges) Abfallstück 20.

Jetzt wird das Messer 9 abgestellt und über seitliche Spannbacken 2I wird das jetzt entstandene Gutteil 22 (das ist das Werkstück I9 ohne das Abfallstück 20) von der Werkstückaufnahme 7 abgehoben. Diese dreht sich jetzt nicht mehr. Diese Situation ist in Fig. 3 gezeigt.

In einem nächsten Verfahrensschritt wird jetzt durch Betätigung des Zylinders I6 der Ring I4 angehoben, bis die Unterseite des Abfallstücks 20 sich über der Oberseite der Werkstückaufnahme 7 befindet. Nachdem der Ring I4 dieselbe Neigung aufweist wie der Arbeitstisch 2, gleitet jetzt das Abfallstück 20 der Schwerkraft folgend in Richtung des Pfeiles 23 zur Seite und fällt dann auf die ebenfalls geneigte Oberfläche des Arbeitstisches 2 und von dort beispielsweise in einen Schrottbehälter. Der Ring I4 wird jetzt wieder abgesenkt und das nächste Werkstück I9 kann auf die Aufnahme 7 aufgesetzt und sofort anschließend bearbeitet werden. Alle diese Vorgänge erfolgen automatisch ohne Eingriff einer Bedienungsperson.

Die Figuren zeigen außerdem, daß in der Situation der Fig. 2 das vom Schwerpunkt des Werkstücks I9 gefällte Lot sich innerhalb des Werkstücks befindet, so daß dieses eine stabile Lage einnimmt, auch wenn der Spannteller 6 noch nicht aufgesetzt ist oder auch sonst keine Einspannung erfolgt. Es wird auch ersichtlich, daß beim Stand der Technik, bei dem der Arbeitstisch 2 horizontal verläuft und die Achse 8 dementsprechend lotrecht, die Abfallstücke 20 sich auf dem Abfalltisch häufen und gesondert abtransportiert werden müssen.

Die Fig. 5 bis 7 zeigen eine Besonderheit in der Ausgestaltung der Werkstückaufnahme 7. Um nämlich die Trennwirkung ausüben zu können, muß das äußere Messer 9 in radialer Richtung nach innen verstellt werden, so daß es wirksam mit dem inneren Messer 13 zwecks Abtrennung des Randes zusammenarbeiten kann. Fig. 5 zeigt nun den Beginn des Beschneidevorgangs, woraus hervorgeht, daß der Zentrierring 18 noch konzentrisch zur Achse 8 angeordnet ist.

Während es Beschneidevorgangs wird der Zentrierring 18 aber in Richtung des Pfeiles 24 - (vergl. Fig. 6) radial verschoben, damit der Trennvorgang wirksam durchgeführt werden kann. Fig. 7 zeigt dann das bereits abgestellte äußere Messer 9 mit abgetrenntem Abfallstück 20, wobei der Zentrierring 18 wieder seine koaxiale Lage eingenommen hat.

Um diese Bewegungen durchführen zu können, befinden sich im Zentrierring 18 übereinander zwei Keilringe 25, die mit Druckfedern 26 auseinander gedrückt werden, wie Fig. 5 zeigt. Die Keilringe haben Keilflächen, die mit Gegen-Keilflächen 27 an der Innenseite des Zentrierringes 18 zusammenarbeiten. Wird nun auf den Zentrierring 18 eine Kraft F in Richtung des Pfeiles 24 ausgeübt (vergl. Fig. 6), so werden über die Keilflächen und Gegen-Keilflächen die beiden Keilringe 25 gegen die Federkraft zusammengeschoben, wie Fig. 6 zeigt. Dadurch kann der Zentrierring 18 exzentrisch zur Seite ausweichen. Hört die Kraft F auf, so nimmt der Zentrierring über die Federn 26 wieder seine Ausgangslage nach Fig. 7 ein.

Es ist ersichtlich, daß die erfindungsgemäße Maschine auch mit mehreren Spindeln ausgerüstet sein kann.

## Ansprüche

1. Maschine zum Beschneiden des Randes eines Formteils mit einer auf Drehung angetriebenen Werkstückaufnahme mit einem Innen-Schermesser, mit einem an das Innen-Schermesser an-und abstellbaren Außen-Beschneidemesser, mit einer Spannvorrichtung zum Aufspannen des vorzugsweise becherförmigen Formteils auf die Werkstückaufnahme und mit einem Arbeitstisch,

**dadurch gekennzeichnet,**

daß der Arbeitstisch (2) gegenüber der Horizontalen geneigt ist und daß ein parallel zur Ebene des Arbeitstisches (2) angeordneter heb-und senkbarer Ausstoßerring (14) vorgesehen ist, der den vom Formteil (19) abgetrennten Abfallring (20) über die Werkstückaufnahme (7) anhebt.

2. Maschine nach Anspruch 1,

**dadurch gekennzeichnet,**

daß man den Neigungswinkel so ausbildet, daß er einerseits möglichst groß ist und andererseits das auf die Werkstückaufnahme (7) aufgesetzte Formteil (19) eine stabile Lage einnimmt.

3. Maschine nach Anspruch 1 oder 2,

**dadurch gekennzeichnet,**

daß die Neigung des Arbeitstisches (2) gegenüber der Horizontalen etwa 25 -40° beträgt.

4. Maschine nach einem der Ansprüche 1 bis 3,
**dadurch gekennzeichnet,**

daß an der Werkstückaufnahme (7) direkt unterhalb des Innen-Schermessers (13) ein Zentrierring (18) vorgesehen ist, dessen Außendurchmesser etwa dem Außendurchmesser des Innen-Schermessers - (13) entspricht, der über Federn (26) coaxial zur Drehachse (8) der Werkstückaufnahme (7) gehalten ist und der bei Einwirken einer Kraft (F) in radialer Richtung (24) sich radial in eine exzentrische Lage verstellt.

5. Arbeitsverfahren für eine Maschine zum Beschneiden des Randes eines Formteils, wobei man das Formteil auf einer Werkstückaufnahme aufspannt und dessen Rand beschneidet, worauf man das daraus entstehende Gutteil und den Abfallring voneinander trennt und beide Teile getrennt abtransportiert,

**dadurch gekennzeichnet,**

daß man nach dem Abtransport des Gutteils (22) den Abfallring (20) mit Hilfe eines zur Horizontalen geneigt angeordneten Ausstoßerrings (14) über die Werkstückaufnahme (7) anhebt, über die möglichst glatt ausgebildete Oberseite des Ausstoßerringes - (14) mittels Schwerkraft vom Ausstoßerring (14) abrutschen läßt und auf einer gegenüber der Horizontalen geneigten Rutsche (2) abfördert, die den Abfallring (20) ebenfalls mittels Schwerkraft weitertransportiert.

Fig. 1

Fig. 7

0 215 384

Fig. 2

Fig. 3

Fig. 4

Fig. 5

Fig. 6